# FASCICULE DE BREVET EUROPEEN

(11) **EP 3 347 118 B1**
(45) Date de publication et mention de la délivrance du brevet: **03.06.2020**
(21) Numéro de dépôt: 16759754.1
(22) Date de dépôt: 31.08.2016
(51) Int. Cl.: B01D 53/14

(54) **PROCÉDÉ DE PURIFICATION D'UN FLUX DE GAZ CHARGÉ EN COV**
VERFAHREN ZUR REINIGUNG EINES VOC-BELADENEN GASSTROMS
METHOD FOR PURIFYING A VOC-LADEN GAS STREAM

(30) Priorité: 09.09.2015 FR 1558372
(43) Date de publication de la demande: 18.07.2018
(73) Titulaire: Xeda International S.A., 13670 Saint Andiol (FR)
(72) Inventeur: SARDO, Alberto, 13160 Chateaurenard (FR); SARDO, Stefano, 13160 Chateaurenard (FR)
(74) Mandataire: Lavoix
(86) Numéro de dépôt international: PCT/EP2016/070501
(87) Numéro de publication internationale: WO 2017/042072

(56) Documents cités:
- EP-A1- 0 073 171
- EP-A1- 2 835 172
- WO-A1-2014/206527
- CN-A- 103 463 935
- FR-A1- 2 915 687
- US-A- 5 427 759
- US-A1- 2013 087 742

## Description

La présente invention concerne en général les procédés de purification d'un flux de gaz chargé en un composé organique volatile (COV), tel que les solvants hydrosolubles par exemple les alcools inférieurs et les esters.

La réduction des émissions de COV dans l'industrie en général est un enjeu majeur.

Certaines installations, par exemple les stations fruitières du type décrites dans la demande de brevet déposée sous le numéro PCT/FR2009/051783 rejettent des quantités importantes de gaz chargé en éthanol.

En effet, dans ces stations, un agent filmogène en solution dans l'éthanol est appliqué sur les fruits. L'installation comprend une zone d'enrobage dans laquelle l'agent filmogène est projeté sur les fruits, et une zone de séchage. Dans la zone de séchage, les fruits sont exposés à un courant d'air, de manière à accélérer l'évaporation du solvant.

Le flux d'air en sortie de la zone de séchage, en fonction de la taille de l'installation, présente un débit compris entre 10000 m³/h et 100000 m³/h. La station rejette entre 15 et 150 litres d'éthanol par heure, c'est-à-dire entre 12 et 120 kg d'éthanol par heure.

Le rejet des COV est aujourd'hui réglementé en France seulement pour les installations classées, mais le sera bientôt pour tous les types d'installations.

La réglementation pour les installations classées fixe les limites suivantes :
- rejet dans l'atmosphère de 110 mg/m³ de COV en terme de carbone total, soit 210 mg/m³ pour l'éthanol ;
- rejet d'eau vers une station d'épuration avec une DCO (demande chimique en oxygène) de 1 à 2 g/l, c'est-à-dire 0,9 g/l pour l'éthanol dans le meilleur des cas.

La station fruitière décrite plus haut rejette environ 1200 mg d'éthanol par m³, c'est-à-dire six fois plus que la concentration fixée par la loi pour les installations classées.

US5427759 divulgue un procédé de purification d'un flux gazeux contenant de l'ammoniac, des composés organiques et du dioxyde de carbone, comprenant une étape de mise en contacte du flux gazeux avec une solution saline.

Ainsi, il existe un besoin pour un procédé permettant de purifier un flux de gaz chargé en COV, qui respecte à la fois les limites de rejet dans l'atmosphère, et les limites de rejet vers les stations d'épuration.

A cette fin, l'invention porte sur un procédé de purification d'un flux de gaz chargé comprenant une quantité de composé organique volatile, le procédé comprenant:
- une étape de mise en contact du flux de gaz chargé avec un flux de solution saline, la solution saline comprenant avant mise en contact au moins 300 g/l de sels, au moins une partie de la quantité de composé organique volatile étant extrait du flux de gaz chargé et absorbé par le flux de solution saline, l'étape de mise en contact produisant un flux de gaz épuré contenant une quantité résiduelle de composé organique volatile et un flux de solution saline chargé ;
- une étape de récupération du composé organique volatile, comprenant une sous-étape de décantation du flux de solution saline chargé, conduisant à la séparation d'une phase contenant le composé organique volatile et de la solution saline, la solution saline issue de la sous-étape de décantation étant recyclée à l'étape de mise en contact.

Ainsi, le procédé comporte une étape de douchage du flux de gaz, qui est bien adaptée pour les débits et les concentrations de COV caractérisant les flux d'air de séchage dans les stations fruitières. Cette étape peut être mise en oeuvre à un coût raisonnable.

L'étape de récupération du composé organique volatile permet de limiter les rejets de COV vers les stations d'épuration et donc de respecter la limite fixée par la loi. La solution saline utilisée à l'étape de mise en contact est fortement concentrée en sel, ce qui permet de récupérer le composé organique volatile par simple décantation. Ceci est particulièrement économique.

Le procédé peut en outre comporter une ou plusieurs des caractéristiques ci-dessous, considérées individuellement ou selon toutes les combinaisons techniquement possibles :
- le composé organique volatile est un solvant hydrosoluble, par exemple un alcool inférieur ou un ester, par exemple de l'éthanol ou de l'acétate d'éthyle ;
- le procédé comprend une étape supplémentaire de mise en contact du flux de gaz épuré avec un flux d'eau, au moins une partie de la quantité résiduelle de composé organique volatile étant extrait du flux de gaz épuré et absorbé par le flux d'eau, l'étape supplémentaire de mise en contact produisant un flux de gaz final et un flux d'eau chargé en composé organique volatile, mélangé à la solution saline chargé ;
- le flux de solution saline utilisé à l'étape de mise en contact est issu de la solution saline obtenue à la sous-étape de décantation, le volume de solution saline étant contrôlé en ajustant le flux d'eau utilisé à l'étape supplémentaire de mise en contact ;
- la solution saline est une solution aqueuse comprenant avant mise en contact entre 300 g/l et 1400 g/l de sels ;
- l'étape de récupération du composé organique volatile comprend une sous-étape de concentration de la solution saline chargée ;
- la sous-étape de concentration est réalisée par mise en contact du flux de solution saline chargée avec un flux de gaz non chargé en composé organique volatile ;
- la solution saline est une solution aqueuse comprenant avant mise en contact entre 300 g/l et 500 g/l de sels ;
- la solution saline est une solution aqueuse de sels de phosphore ; - la solution saline présente, avant mise en contact, la composition suivante :
- orthophosphate alcalin de 0 à 1500 g/l ;
- pyrophosphate alcalin de 300 à 1500 g/l ;
- hypophosphite alcalin de 0 à 800 g/l ;
- phosphite alcalin de 0 à 800 g/l ; et
- le composé organique volatile présente une solubilité dans l'eau supérieure à 300 g/l, de préférence supérieure à 500 g/l.

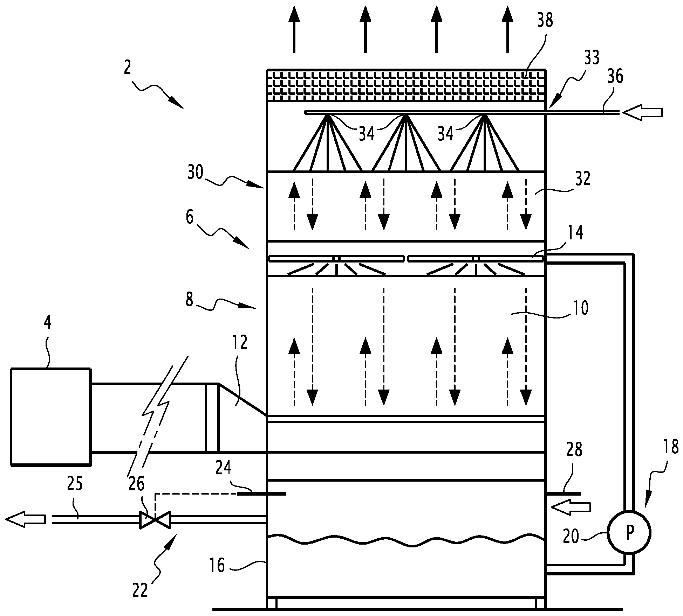

D'autres caractéristiques et avantages de l'invention ressortiront de la description détaillée qui en est donnée ci-dessous, à titre indicatif et nullement limitatif, en référence à le figure unique annexée représentant une installation permettant de mettre en oeuvre le procédé de purification de l'invention.

Le procédé de l'invention vise à purifier un flux de gaz comprenant une quantité de composé organique volatile.

Le flux de gaz est typiquement un flux d'air. Il est chargé par un ou plusieurs composés organiques volatiles. Ces composés organiques volatiles sont typiquement des solvants hydrosolubles comme par exemple des alcools inférieurs et des esters. Par exemple, le composé organique volatile est de l'éthanol ou de l'acétate d'éthyle.

Le procédé est particulièrement adapté aux COV ayant une solubilité dans l'eau supérieure à 300 g/l, de préférence supérieure à 500 g/l.

Le flux de gaz est issu de toutes sortes d'installations industrielles. Par exemple, le flux de gaz est issu d'une station de traitement de fruits ou de légumes, dans laquelle une composition est dispersée sur les fruits ou les légumes. En variante, le flux de gaz est issu de différentes industries de transformation (papiers, tissus, plastiques...etc), dans lesquelles des esters sont utilisés comme solvants de colles.

Dans le cas d'une station fruitière, cette composition contient par exemple un agent tel qu'un agent filmogène destiné à améliorer la conservation ou l'aspect des fruits ou des légumes, dans un solvant. Le solvant est un COV ou contient un COV.

Pendant le séchage des fruits ou des légumes, ceux-ci sont exposés à un flux d'air visant à accélérer le séchage. Le flux d'air comporte une quantité significative de composé organique volatile, provenant de l'évaporation de la composition répandue sur les fruits ou les légumes.

Le procédé de purification comprend au moins :
- une étape de mise en contact du flux de gaz chargé en COV avec un flux de solution saline, au moins une partie de la quantité de COV étant extrait du flux du gaz chargé et absorbé par le flux de solution saline, l'étape de mise en contact produisant un flux de gaz épuré contenant une quantité résiduelle de COV et un flux de solution saline chargé;
- une étape de récupération du composé organique volatile, comprenant une sous-étape de décantation du flux de solution saline chargé, conduisant à la séparation d'une phase contenant le composé organique volatile et de la solution saline.

La solution saline issue de la sous-étape de décantation est en outre recyclée à l'étape de mise en contact.

Après l'étape de mise en contact, le flux de gaz peut rencontrer de l'eau pure afin de réintégrer l'eau évaporée et compléter l'abattement du solvant, comme décrit plus bas.

On entend dans la présente demande de brevet par « absorption », le fait que le COV soit transféré du gaz vers un flux de liquide, ici la solution saline, quelque soit le mécanisme physique ou chimique provoquant ce transfert.

La solution saline comporte une quantité très élevée de sel, et plus précisément, avant mise en contact avec le flux de gaz, comprend au moins 300 g/l de sel.

L'étape de mise en contact est réalisée par tous moyens appropriés.

Avantageusement, elle est réalisée en faisant circuler à contre-courant l'un de l'autre le flux de gaz chargé et le flux de solution saline.

Dans un exemple de réalisation, l'étape de mise en contact est réalisée dans une tour d'absorption, typiquement dans une tour à garnissage. La tour contient une grande quantité de garnissages, par exemple des éléments en matière plastique en nid d'abeille, ce qui permet d'augmenter la surface de contact entre le flux de gaz et le flux de solution saline. Le gaz est introduit en dessous des garnissages et circule de bas en haut. Le flux de solution saline est projeté au-dessus des garnissages et s'écoule par gravité, de haut en bas.

Typiquement, le flux de solution saline chargé est collecté dans un bac de décantation placé sous la tour d'absorption.

L'étape de récupération du composé organique volatile, notamment la sous-étape de décantation du flux de solution saline chargé, est effectuée dans ce bac de décantation.

La solution saline est typiquement une solution aqueuse. Ainsi, le flux de gaz chargé va se charger en humidité par évaporation d'une partie de l'eau contenue dans la solution saline. La concentration en sel de la solution saline augmente donc pendant l'étape de mise en contact.

Le COV est abattu par dissolution dans la solution saline.

Dans le cas où le COV est de l'éthanol, l'équilibre eau éthanol existe à la concentration de l'azéotrope (environ 95% d'éthanol et 5% d'eau en poids). Sans être liée par cette théorie, la Demanderesse pense que si le flux de gaz chargé est enrichi en vapeur d'eau au-delà de la concentration de saturation en eau, l'eau en excès reste liquide et une partie de l'éthanol est dissoute dans ce liquide, de manière à ce que la concentration dans le flux de gaz chargé reste celle de l'azéotrope.

A la sous-étape de décantation, le flux de solution saline chargé se sépare en deux phases : la phase contenant le COV, et la solution saline. La solution saline a typiquement une densité plus élevée que la phase contenant le COV, du fait de sa teneur en sel. Elle s'accumule donc en partie inférieure du bac de décantation. La phase contenant le COV surnage au-dessus de la solution saline.

La phase contenant le COV est soutirée en continu ou de manière périodique.

Les moyens de soutirages sont de tous types adaptés. Dans un exemple de réalisation, le bac de décantation est équipé d'un densimètre automatique, disposé en partie supérieure du bac. Quand le densimètre détecte que le liquide remplissant la partie supérieure du bac est à une densité correspondant à celle de la phase contenant le COV, le densimètre provoque l'ouverture d'une sortie d'évacuation de phase contenant le COV. Par exemple, quand le densimètre est dénoyé du fait de l'écoulement de la phase contenant le COV hors du bac, le densimètre commande la fermeture de la sortie.

En variante, l'évacuation de la phase contenant le COV se fait par débordement, ou encore par un siphon, etc.

La solution saline récupérée en partie inférieure du bac de décantation est recyclée. En d'autres termes, le flux de solution saline utilisé à l'étape de mise en contact est issu de la solution saline obtenue à la sous-étape de décantation.

Par exemple, une pompe ou tout autre organe de transfert aspire la solution saline obtenue à l'issue de la sous-étape de décantation, et la refoule vers la tour d'absorption.

Avantageusement, le procédé comprend une étape supplémentaire de mise en contact du flux de gaz épuré avec un flux d'eau. Le flux d'eau est un flux d'eau pure.

Le flux de gaz épuré est issu de l'étape de mise en contact.

Au moins une partie de la quantité résiduelle de composé organique volatile est extraite du flux de gaz épuré et absorbée par le flux d'eau au cours de cette étape. L'étape supplémentaire de mise en contact produit un flux de gaz final et un flux d'eau chargé en composant organique volatile.

Le flux de gaz final est rejeté dans l'atmosphère, après passage dans un éventuel séparateur de goutte. Le flux de gaz final ne contient qu'une quantité minime de COV.

Le flux d'eau chargé en COV est typiquement mélangé à la solution saline chargée provenant de l'étape de mise en contact.

Typiquement, l'étape supplémentaire de mise en contact est effectuée dans la même tour d'absorption que l'étape de mise en contact.

Pour ce faire, la tour d'absorption comporte un tronçon principal rempli par des garnissages, et un tronçon supérieur rempli par des garnissages supplémentaires, placé au-dessus du tronçon principal.

L'étape de mise en contact est réalisée dans le tronçon principal, et l'étape supplémentaire de mise en contact dans le tronçon supérieur.

L'injection du flux de solution saline est réalisée entre les garnissages et les garnissages supplémentaires.

Le flux de gaz épuré, qui circule de bas en haut dans le tronçon principal, pénètre directement dans les garnissages supérieurs après avoir quitté le tronçon principal. Il circule de nouveau de bas en haut à travers les garnissages supérieurs.

Le flux d'eau est injecté au-dessus des garnissages supérieurs, par tous moyens adaptés.

Par exemple, il est injecté par des buses alimentées par un circuit d'alimentation en eau. Le flux d'eau circule de haut en bas à travers les garnissages supérieurs.

Typiquement, le flux d'eau chargé en COV, après avoir traversé les garnissages supérieurs, ruisselle à travers les garnissages.

Il est collecté dans le bac de décantation, avec la solution saline chargée, et se mélange à celle-ci.

De préférence, le volume de solution saline est contrôlé en ajustant le flux d'eau utilisé à l'étape supplémentaire de mise en contact.

En effet, le flux de gaz final quittant la tour d'absorption est chargé en humidité. Ainsi, il est nécessaire de rajouter périodiquement ou en continu une quantité équivalente d'eau, pour maintenir la concentration en sel de la solution saline à une valeur ou dans une fourchette prédéterminée.

En variante, le procédé ne comprend pas l'étape supplémentaire de mise en contact du flux de gaz épuré avec un flux d'eau, le flux de gaz épuré étant rejeté alors directement dans l'atmosphère, avantageusement après passage à travers un séparateur de gouttes.

Dans ce cas, le volume de solution saline est contrôlé en ajoutant une quantité d'eau directement dans le bac de décantation. Celui-ci est équipé d'une arrivée d'eau.

Selon une autre variante, pour des raisons d'efficacité de l'extraction du COV, il est possible de fixer le flux d'eau à un débit entraînant l'introduction dans le procédé d'une quantité d'eau supérieure à celle entraînée avec le flux de gaz final. Il est alors nécessaire d'évacuer cette quantité d'eau supplémentaire, pour maintenir la concentration de sel à sa valeur ou dans sa fourchette prédéterminée.

Pour ce faire, le procédé est par exemple mis en oeuvre pendant la journée de manière à traiter le flux de gaz chargé en COV, en exécutant l'étape de mise en contact supplémentaire. Pendant la nuit, le procédé est mis en oeuvre avec un flux de gaz non chargé en COV, sans exécuter l'étape de mise en contact supplémentaire. La solution saline est donc reconcentrée pendant la nuit, du fait de l'humidité entraînée avec le flux d'air final.

Selon un premier mode de réalisation, la solution saline a une concentration en sel adaptée pour permettre à la fois l'absorption du COV pendant l'étape de mise en contact, et la décantation du flux de solution saline chargée, pendant l'étape de récupération du COV.

Dans ce cas, la solution saline est typiquement une solution aqueuse comprenant, avant mise en contact avec le flux de gaz chargé, entre 300 g/l et 1400 g/l de sel.

Cette concentration est fonction notamment de la nature du COV.

Dans le cas de l'éthanol, une concentration de 500 g/l de sel rend la solution saline non miscible avec l'éthanol. L'éthanol en mélange concentré avec de l'eau forme une phase séparée, lors de la sous-étape de décantation, surnageant sur la solution saline. La phase d'éthanol a une teneur massique en éthanol entre 30% et 95%, le reste étant essentiellement de l'eau. La teneur en éthanol est fonction de la concentration en sel de la solution saline.

Quand la concentration de sel dépasse 500 g/l, la sous-étape de décantation produit une solution d'éthanol contenant une relativement forte concentration en eau. En revanche, l'absorption de l'éthanol lors de l'étape de mise en contact est facilitée.

A l'opposé, quand la concentration en sel est proche de 1500 g/l, la décantation produit une solution d'éthanol ne contenant que très peu d'eau, par exemple 5% d'eau en masse. En revanche, le transfert de l'éthanol du flux de gaz chargé au flux de solution saline est moins efficace.

Dans ce premier mode de réalisation, la phase contenant le COV décante de manière continue, au fur et à mesure que le COV est extrait du flux de gaz chargé.

Dans un seconde mode de réalisation, la solution saline utilisée à l'étape de mise en contact comprend une concentration en sel plus basse que dans le premier mode de réalisation. Cette concentration en sel est par exemple comprise entre 300 g/l et 500 g/l. Cette concentration n'est pas suffisante pour provoquer la décantation du flux de solution saline chargée, et donc la séparation de la phase contenant le COV et de la solution saline.

Dans ce cas, l'étape de récupération du composé organique volatile comprend une sous-étape de concentration de la solution saline chargée. Cette sous-étape précède la sous-étape de décantation du flux de solution saline chargée.

La sous-étape de concentration est prévue pour augmenter la concentration en sel de la solution saline chargée, jusqu'à une concentration permettant la décantation du flux de solution saline chargée.

Par exemple, si le COV est de l'éthanol, on peut utiliser une solution saline ayant une concentration en sel de 400 g/l pendant l'étape de mise en contact. Pendant la sous-étape de concentration, la solution saline chargée est concentrée jusqu'à ce que la concentration en sel dépasse 500 g/l, et vaille par exemple 1000 g/l.

Dans ce cas, l'étape de récupération du composé organique volatile est effectuée après l'étape de mise en contact, et non de manière concomitante à celle-ci comme dans le premier mode de réalisation.

Par exemple, l'étape de mise en contact est réalisée dans la journée, et l'étape de récupération du COV est réalisée dans la nuit.

Dans un exemple de réalisation, la sous-étape de concentration est réalisée par mise en contact du flux de solution saline chargée avec un flux de gaz non chargé en composé organique volatile.

Cette sous-étape de concentration est par exemple réalisée dans la tour d'absorption où est réalisée l'étape de mise en contact.

Comme indiqué plus haut, la mise en contact du flux de gaz non chargé en COV avec le flux de solution saline chargée fait que le flux de gaz va se charger en humidité, entraînant une augmentation de la concentration en sel dans la solution saline chargée.

Typiquement, la solution saline est une solution aqueuse de sel de phosphore. Comme indiqué plus haut, la solution aqueuse comprend au moins 300 g/l de sel. Pour le premier mode de réalisation, elle comprend entre 300 et 1400 g/l de sel. Pour le second mode de réalisation, la solution saline utilisée à l'étape de mise en contact comprend entre 300 et 500 g/l de sel.

La solution saline comprend un ou plusieurs sels de phosphore en mélange.

Typiquement, la solution saline présente, avant mise en contact, la composition suivante :
- orthophosphate alcalin de 0 à 1500 g/l ;
- pyrophosphate alcalin de 300 à 1500 g/l ;
- hypophosphite alcalin de 0 à 800 g/l ;
- phosphite alcalin de 0 à 800 g/l.

Ces concentrations sont pour une solution aqueuse, étant entendu que la solution comprend au moins 300 g/l de sels.

Le mélange de ces sels présente l'avantage d'atteindre des concentrations très élevées, qui sont stables à température basse comparée aux sels utilisés. Il est possible de rajouter d'autres types de sels, par exemple des acétates ou carbonates de potassium.

De préférence, on prépare la solution à partir de tétrapotassium pyrophosphate, d'orthophosphate dipotassique, d'hypophosphite potassique et de phosphite potassique.

De préférence, la solution saline présente, avant l'étape de mise en contact, la composition suivante :
- tétrapotassium pyrophosphate: 400 à 800 g/l ;
- orthophosphate dipotassique de 500 à 1000 g/l ;
- hypophosphite potassique de 0 à 100 g/l ;
- phosphite de potassium 0 à 200 g/l.

Il est à noter que le procédé de l'invention ne comprend normalement pas une étape de chauffage du flux de gaz chargé avant l'étape de mise en contact. Il est typiquement mis en oeuvre à la température à laquelle le flux de gaz chargé sort de l'installation.

Le procédé de l'invention est typiquement mis en oeuvre dans l'ensemble 2 représenté sur la figure.

Le flux de gaz chargé à traiter provient de l'installation 4.

L'ensemble 2 comprend une tour d'absorption 6, d'orientation verticale.

La tour d'absorption 6 comporte un tronçon principal 8 dans lequel sont disposés des garnissages 10.

Les garnissages 10 sont typiquement des éléments en matière plastique, en forme de nid d'abeille.

La tour 6 présente une entrée 12 pour le flux de gaz chargé en COV, raccordée à l'installation 4. Cette entrée 12 est située sous les garnissages 10.

Le tronçon principal 8 comporte encore un dispositif 14 de projection du flux de solution saline, placé au-dessus des garnissages 10. Ce dispositif comporte des buses ou des rampes d'aspersion.

Par ailleurs, l'ensemble 2 comporte un bac de décantation 16, placé sous la tour 6, et plus précisément sous le tronçon principal 8 de la tour. Le tronçon principal 8 de la tour est ouvert vers le bas, et le bac de décantation 16 est ouvert vers le haut. Ainsi, le flux de solution saline chargé ruisselant à travers les garnissages 10 est collecté par gravitation directement dans le bac de décantation 16.

L'ensemble 2 comporte par ailleurs un circuit 18 de recyclage de la solution saline du bac de décantation 16 jusqu'au dispositif de projection 14. Le circuit 18 comporte une pompe 20, ou tout autre organe de circulation adapté, ayant une aspiration raccordée au bac de décantation 16 et un refoulement raccordé au dispositif de projection 14. L'aspiration de la pompe 20 est raccordée à un point bas du bac de décantation 16.

L'ensemble 2 comporte encore un dispositif 22 prévu pour l'évacuation de la phase contenant le COV. Ce dispositif comporte par exemple un densimètre automatique 24, agencé pour mesurer la densité du fluide remplissant une partie supérieure du bac de décantation 16. Le dispositif 22 comporte encore un conduit d'évacuation 25, équipé d'une vanne d'obturation commandée 26. La vanne 26 est commandée par le densimètre automatique 24. Le conduit d'évacuation 25 débouche dans la partie supérieure du bac de décantation, à un niveau inférieur à celui du densimètre automatique 24.

Par ailleurs, le bac de décantation 16 est typiquement équipé d'une arrivée d'eau 28, susceptible d'être sélectivement ouverte ou fermée. L'arrivée d'eau 28 permet d'ajouter de l'eau dans le bac 16, pour diluer la solution saline, le cas échéant.

De préférence, la tour 6 comporte un tronçon supérieur 30, dans lequel le flux d'air épuré provenant du tronçon principal 8 est mis en contact avec un flux d'eau. Le tronçon supérieur 30 est placé au-dessus du tronçon principal 8. Il comporte des garnissages supplémentaires 32, disposés à l'intérieur de la tour 6, au-dessus du dispositif de projection 14 du flux de solution saline.

Les garnissages supplémentaires 32 sont par exemple des éléments en nid d'abeille, en matière plastique.

Le tronçon supérieur 30 comporte par ailleurs un dispositif 33 d'injection du flux d'eau, disposé au-dessus des garnissages supplémentaires 32. Ce dispositif 33 comporte des buses ou des rampes de projection 34, alimentées par un conduit d'approvisionnement en eau 36.

La tour 6 comprend encore un séparateur de gouttes 38 disposé à l'intérieur de la tour 6, au-dessus du dispositif d'injection du flux d'eau 33.

Il est à noter que l'ensemble 2 est adapté pour la mise en oeuvre des deux modes de réalisation de l'invention décrits ci-dessus.

Le fonctionnement de l'ensemble 2 est le suivant.

Le flux de gaz chargé en COV, provenant de l'installation 4, est introduit dans la tour 6 par l'entrée 12. Il circule de bas en haut à travers les garnissages 10.

La solution saline est projetée par le dispositif de projection 14, au-dessus des garnissages 10. La solution saline circule de haut en bas à travers les garnissages 10.

Le flux de gaz chargé en COV et la solution saline circulent à contre-courant dans les garnissages 10, et sont mis en contact l'un avec l'autre. Une partie de la quantité de COV est extraite du flux de gaz chargé et absorbée par le flux de solution saline.

Le flux de gaz épuré sortant du tronçon principal 8 pénètre dans le tronçon supérieur 30. Il circule de bas en haut à travers les garnissages supplémentaires 32. Un flux d'eau est, de manière concomitante, injecté dans le tronçon supérieur 30, par le dispositif 33. Le flux d'eau circule de haut en bas à travers les garnissages supplémentaires 32. La quantité résiduelle de COV contenue dans le flux de gaz épuré est transférée dans sa quasi-totalité au flux d'eau.

En sortant du tronçon supérieur 30, le flux de gaz final traverse le séparateur de gouttes 38, et est rejeté à l'extérieur de la tour 6. Le séparateur de gouttes 38 collecte les gouttes de liquide se trouvant dans le flux de gaz final, et évite que ces gouttes soient rejetées à l'extérieur de la tour 6.

Toutefois, le flux de gaz final contient de la vapeur d'eau.

Pour maintenir la concentration en sel de la solution saline constante, le flux d'eau injecté par le dispositif 33 dans le tronçon supérieur 30 de la tour 6 est typiquement réglé de manière à compenser la quantité de vapeur d'eau entraînée par le flux de gaz final hors de la tour.

La solution saline chargée en COV sortant des garnissages 10 est collectée dans le bac de décantation 16. De même, le flux d'eau chargé en COV sortant des garnissages supplémentaires 33 ruisselle à travers les garnissages 10 et est collecté également dans le bac de décantation 16.

Du fait de la forte concentration en sel dans la solution saline, cette solution saline et la phase de COV ne sont pas miscibles. Ainsi, il se produit une décantation au sein du bac, conduisant à la séparation de la phase de COV en partie supérieure et de la solution saline en partie inférieure.

Au fur et à mesure que le COV est extrait du flux de gaz chargé, la quantité de COV dans la solution saline chargée augmente. La hauteur de la phase de COV dans le bac de décantation 16 augmente donc elle aussi. Quand le densimètre 24 est noyé dans la phase de COV, le densimètre 24 provoque l'ouverture de la vanne 26. Ceci permet d'évacuer une partie de la phase de COV.

Un exemple détaillé de réalisation va maintenant être décrit. Il concerne la purification d'un flux d'air chargé en éthanol, provenant d'une station fruitière 4. Dans cette station fruitière, un agent filmogène en solution dans l'éthanol est projeté sur des fruits. Les fruits sont ultérieurement soumis à une opération de séchage, par un flux d'air circulant au contact des fruits. Ce flux d'air se charge en éthanol. Le procédé de purification vise à traiter le flux d'air chargé en éthanol, à la sortie de la station fruitière.

Le débit d'air est compris entre 10000 ³/h et 100000 ³/h. Le débit d'éthanol est compris entre 15 et 150 litres d'éthanol par heure, soit entre 12 et 120 kg d'éthanol par heure.

La solution saline est une solution aqueuse présentant la composition suivante :
- tétrapotassium pyrophosphate de 400 à 800 g/l ;
- orthophosphate dipotassique 500 à 1000 g/l ;
- hypophosphite potassique de 0 à 100 g/l ;
- phosphite de potassium de 0 à 200 g/l.

La concentration des différents éléments ci-dessus est choisie en fonction de la teneur en éthanol dans le flux d'air.

La section de la tour 6, prise perpendiculairement à la direction verticale, est de 0,1 à 1 m² pour 1000 m³/h d'air à traiter.

Le débit de solution aqueuse de sel de phosphate recirculé et injecté par le dispositif 14 est de 1000 à 20000 l/h pour 1000 m²/h d'air à traiter.

Le débit d'eau injecté dans le tronçon supérieur de la tour 6 est réglé pour compenser la quantité d'eau entraînée avec le flux de gaz final hors de la tour.

Il est à souligner que l'étape supplémentaire de mise en contact présente de multiples avantages.

Elle permet de capter une fraction des COV. Elle facilite la dissolution des COV dans la solution saline, en baissant la concentration de sel dans la solution saline quand celle-ci est trop élevée.

Elle maintient constante la concentration en sels de la solution saline, en compensant la quantité de vapeur d'eau entraînée par le flux d'air.

La solution saline injectée à l'étape de mise en contact est initialement diluée par le flux d'eau injecté à l'étape supplémentaire de mise en contact, puis se concentre progressivement par évaporation au cours de l'étape de mise en contact. Ceci permet ensuite la séparation du COV et de la solution saline à l'étape de récupération.

## Revendications

1. Procédé de purification d'un flux de gaz chargé comprenant une quantité de composé organique volatile, le procédé comprenant:
- une étape de mise en contact du flux de gaz chargé avec un flux de solution saline, la solution saline comprenant avant mise en contact au moins 300 g/l de sels, au moins une partie de la quantité de composé organique volatile étant extrait du flux de gaz chargé et absorbé par le flux de solution saline, l'étape de mise en contact produisant un flux de gaz épuré contenant une quantité résiduelle de composé organique volatile et un flux de solution saline chargé ;
- une étape de récupération du composé organique volatile, comprenant une sous-étape de décantation du flux de solution saline chargé, conduisant à la séparation d'une phase contenant le composé organique volatile et de la solution saline, la solution saline issue de la sous-étape de décantation étant recyclée à l'étape de mise en contact.

2. Procédé selon la revendication 1, **caractérisé en ce que** le composé organique volatile est un solvant hydrosoluble, par exemple un alcool inférieur ou un ester, par exemple de l'éthanol ou de l'acétate d'éthyle.

3. Procédé selon l'une quelconque des revendications précédentes, **caractérisé en ce que** le procédé comprend une étape supplémentaire de mise en contact du flux de gaz épuré avec un flux d'eau, au moins une partie de la quantité résiduelle de composé organique volatile étant extrait du flux de gaz épuré et absorbé par le flux d'eau, l'étape supplémentaire de mise en contact produisant un flux de gaz final et un flux d'eau chargé en composé organique volatile, mélangé à la solution saline chargé.

4. Procédé selon la revendication 3, **caractérisé en ce que** le flux de solution saline utilisé à l'étape de mise en contact est issu de la solution saline obtenue à la sous-étape de décantation, le volume de solution saline étant contrôlé en ajustant le flux d'eau utilisé à l'étape supplémentaire de mise en contact.

5. Procédé selon l'une quelconque des revendications précédentes, **caractérisé en ce que** la solution saline est une solution aqueuse comprenant avant mise en contact entre 300 g/l et 1400 g/l de sels.

6. Procédé selon l'une quelconque des revendications 1 à 4, **caractérisé en ce que** l'étape de récupération du composé organique volatile comprend une sous-étape de concentration de la solution saline chargée.

7. Procédé selon la revendication 6, **caractérisé en ce que** la sous-étape de concentration est réalisée par mise en contact du flux de solution saline chargée avec un flux de gaz non chargé en composé organique volatile.

8. Procédé selon la revendication 6 ou 7, **caractérisé en ce que** la solution saline est une solution aqueuse comprenant avant mise en contact entre 300 g/l et 500 g/l de sels.

9. Procédé selon l'une quelconque des revendications précédentes, **caractérisé en ce que** la solution saline est une solution aqueuse de sels de phosphore.

10. Procédé selon la revendication 9, **caractérisé en ce que** la solution saline présente, avant mise en contact, la composition suivante :
- orthophosphate alcalin de 0 à 1500 g/l ;
- pyrophosphate alcalin de 300 à 1500 g/l ;
- hypophosphite alcalin de 0 à 800 g/l ;
- phosphite alcalin de 0 à 800 g/l.

11. Procédé selon l'une quelconque des revendications précédentes, **caractérisé en ce que** le composé organique volatile présente une solubilité dans l'eau supérieure à 300 g/l, de préférence supérieure à 500 g/l.

## Patentansprüche

1. Verfahren zum Reinigen eines beladenen Gasstroms, der eine Menge einer flüchtigen organischen Verbindung enthält, wobei das Verfahren umfasst:
- einen Schritt des Inkontaktbringens des beladenen Gasstroms mit einem Salzlösungsstrom einer, wobei die Salzlösung vor dem Inkontaktbringen mindestens 300 g/l an Salzen enthält und mindestens ein Teil der Menge der flüchtigen organischen Verbindung aus dem beladenen Gasstrom von dem Salzlösungsstrom extrahiert und absorbiert wird, wobei der Schritt des Inkontaktbringens einen gereinigten Gasstrom, der eine Restmenge der flüchtigen organischen Verbindung enthält, und einen beladenen Salzlösungsstrom erzeugt;
- einen Schritt der Rückgewinnung der flüchtigen organischen Verbindung, der einen Unterschritt des Absetzens des beladenen Salzlösungsstrom umfasst, der zu einer Abscheidung einer Phase führt, die die flüchtige organische Verbindung und die Salzlösung enthält, wobei die aus den Unterschritt des Absetzens stammende Salzlösung dem Schritt des Inkontaktbringens wieder zugeführt wird.

2. Verfahren nach Anspruch 1, **dadurch gekennzeichnet, dass** die flüchtige organische Verbindung ein wasserlösliches Lösungsmittel, beispielsweise ein niederer Alkohol, oder ein Ester, beispielsweise ein Ethanol oder Ethylazetat, ist.

3. Verfahren nach einem beliebigen der vorhergehenden Ansprüche,
**dadurch gekennzeichnet, dass** das Verfahren einen zusätzlichen Schritt des Inkontaktbringens des gereinigten Gasstroms mit einem Wasserstrom umfasst, wobei mindestens ein Teil der Restmenge der flüchtigen organischen Verbindung von dem Wasserstrom aus dem gereinigten Gasstrom extrahiert und absorbiert wird, wobei der zusätzliche Schritt des Inkontaktbringens einen Abschlussgasstrom und einen mit der flüchtigen organischen Verbindung beladenen Wasserstrom, gemischt mit der beladenen Salzlösung erzeugt.

4. Verfahren nach Anspruch 3, **dadurch gekennzeichnet, dass** der bei dem Schritt des Inkontaktbringens verwendete Salzlösungsstrom, aus der bei dem Unterschritt des Absetzens erhaltenen Salzlösung stammt, wobei das Volumen der Salzlösung durch Einstellen der bei dem zusätzlichen Schritt des Inkontaktbringens verwendeten Wasserstroms gesteuert wird.

5. Verfahren nach einem beliebigen der vorhergehenden Ansprüche,
**dadurch gekennzeichnet, dass** die Salzlösung eine wässrigen Lösung ist, die vor dem Inkontaktbringen zwischen 300 g/l und 1400 g/l an Salzen enthält.

6. Verfahren nach einem beliebigen der Ansprüche 1 bis 4, **dadurch gekennzeichnet, dass** der Schritt der Rückgewinnung der flüchtigen organischen Verbindung einen Unterschritt des Aufkonzentrierens der beladenen Salzlösung umfasst.

7. Verfahren nach Anspruch 6, **dadurch gekennzeichnet, dass** der Unterschritt des Aufkonzentrierens durch das Inkontaktbringen des beladenen Strom der Salzlösung mit einem nicht mit der flüchtigen organischen Verbindung beladenen Gasstrom durchgeführt wird.

8. Verfahren nach Anspruch 6 oder 7, **dadurch gekennzeichnet, dass** die Salzlösung eine wässrige Lösung ist, die vor dem Inkontaktbringen zwischen 300 g/l und 500 g/l an Salzen enthält.

9. Verfahren nach einem beliebigen der vorhergehenden Ansprüche,
**dadurch gekennzeichnet, dass** die Salzlösung eine wässrige Lösung von Phosphorsalzen ist.

10. Verfahren nach Anspruch 9, **dadurch gekennzeichnet, dass** die Salzlösung vor dem Inkontaktbringen die folgende Zusammensetzung aufweist:
- 0 bis 1500 g/l alkalisches Orthophosphat;
- 300 bis 1500 g/l alkalisches Pyrophosphat;
- 0 bis 800 g/l alkalisches Hypophosphit;
- 0 bis 800 g/l alkalisches Phosphit.

11. Verfahren nach einem beliebigen der vorhergehenden Ansprüche, **dadurch gekennzeichnet, dass** die flüchtige organische Verbindung eine Löslichkeit im Wasser größer als 300 g/l, vorzugsweise größer als 500 g/l aufweist.

## Claims

1. A method for purifying a stream of laden gas comprising a quantity of volatile organic compound, the method comprising:
- a step for placing the laden gas stream in contact with a saline solution stream, the saline solution stream comprising, before placement in contact, at least 300 g/l of salts, at least part of the quantity of volatile organic compound being extracted from the laden gas stream and absorbed by the saline solution stream, the placement in contact step producing a purified gas stream containing a residual quantity of volatile organic compound and a laden saline solution stream;
- a step for recovering the volatile organic compound, comprising a sub-step for decanting a laden saline solution stream, leading to the separation of a phase containing the volatile organic compound and of the saline solution, the saline solution derived from the decanting sub-step is recycled in the placement in contact step.

2. The method according to claim 1, **characterized in that** the volatile organic compound is a water-soluble solvent, for example an inferior alcohol or an ester, for example ethanol or ethyl acetate.

3. The method according to any one of the preceding claims, **characterized in that** the method comprises an additional step for placing the purified gas stream in contact with a water stream, at least part of the residual quantity of volatile organic compound being extracted from the purified gas stream and absorbed by the water stream, the additional step for placement in contact producing a final gas stream and a water stream laden with a volatile organic compound, mixed with the laden saline solution.

4. The method according to claim 3, **characterized in that** the saline solution stream used in the placement in contact step is derived from the saline solution obtained in the decanting sub-step, the volume of saline solution being controlled while adjusting the water stream used in the additional placement in contact step.

5. The method according to any one of the preceding claims, **characterized in that** the saline solution is an aqueous solution comprising, before placement in contact, between 300 g/l and 1400 g/l of salts.

6. The method according to any one of claims 1 to 4, **characterized in that** the step for recovery of the volatile organic compound comprises a sub-step for concentration of the laden saline solution.

7. The method according to claim 6, **characterized in that** the concentration sub-step is done by placing the laden saline solution stream in contact with a gas stream not laden with a volatile organic compound.

8. The method according to claim 6 or 7, **characterized in that** the saline solution is an aqueous solution comprising, before placement in contact, between 300 g/l and 500 g/l of salts.

9. The method according to any one of the preceding claims, **characterized in that** the saline solution is an aqueous solution of phosphorous salt.

10. The method according to claim 9, **characterized in that** the saline solution has, before placement in contact, the following composition:
- alkali orthophosphate from 0 to 1500 g/l;
- alkali pyrophosphate from 300 to 1500 g/l;
- alkali hypophosphite from 0 to 800 g/l;
- alkali phosphite from 0 to 800 g/l.

11. The method according to any one of the preceding claims, **characterized in that** the volatile organic compound has a solubility in water greater than 300 g/l, preferably greater than 500 g/l.
